(19) Europäisches Patentamt
European Patent Office
Office européen des brevets

(11) **EP 3 683 641 A1**

(12) **EUROPEAN PATENT APPLICATION**

(43) Date of publication:
**22.07.2020 Bulletin 2020/30**

(51) Int Cl.:
**G05B 23/02** (2006.01)

(21) Application number: **20151320.7**

(22) Date of filing: **10.01.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.01.2019 US 201916252203**

(71) Applicant: Honeywell International Inc.
**Morris Plains, NJ 07950 (US)**

(72) Inventors:
• CUI, Qiushi
**Morris Plains, NJ 07950 (US)**
• SHUE, Jack
**Morris Plains, NJ 07950 (US)**
• CHEN, Shuai
**Morris Plains, NJ 07950 (US)**
• HU, Yong
**Morris Plains, NJ 07950 (US)**

(74) Representative: LKGlobal UK Ltd.
**23 Skylines Village
London E14 9TS (GB)**

(54) **METHODS FOR DETERMINING USAGE IN FLY-BY-WIRE SYSTEMS**

(57) Methods and systems are provided for monitoring usage associated with a control component of a vehicle. Environmental states are determined for different time segments based on measurement data and utilized to determine an effective usage associated with each of the different time segments. Cumulative usage associated with the control component is determined based on the effective usages associated with the different time segments, and one or more actions are initiated based on the cumulative usage. For example, operation of the control component may be dynamically adjusted based on the cumulative usage, or maintenance actions may be recommended, scheduled, or otherwise initiated.

EP 3 683 641 A1

```
       MONITORING PROCESS        ⟶ 200

┌──────────────────────────────────┐
│     OBTAIN OPERATIONAL DATA       │ ⟶ 202
└──────────────────────────────────┘

┌──────────────────────────────────┐
│     OBTAIN ENVIRONMENTAL DATA     │ ⟶ 204
└──────────────────────────────────┘

┌──────────────────────────────────┐
│  OBTAIN CONTROL SURFACE ACTUATION DATA │ ⟶ 206
└──────────────────────────────────┘

┌──────────────────────────────────┐
│   DEFINE TIME SEGMENTS FOR ANALYSIS │ ⟶ 208
└──────────────────────────────────┘

┌──────────────────────────────────┐
│ IDENTIFY REPRESENTATIVE STATES FOR CONTEXTUAL │ ⟶ 210
│     VARIABLES DURING EACH TIME SEGMENT        │
└──────────────────────────────────┘

┌──────────────────────────────────┐
│  DETERMINE USAGE COEFFICIENT FOR EACH TIME │ ⟶ 212
│  SEGMENT BASED ON INTEGRATED CONTEXTUAL STATE │
└──────────────────────────────────┘

┌──────────────────────────────────┐
│ DETERMINE EFFECTIVE USAGE FOR EACH TIME SEGMENT │ ⟶ 214
│  BASED ON USAGE COEFFICIENT AND SEGMENT DURATION │
└──────────────────────────────────┘

┌──────────────────────────────────┐
│ DETERMINE CUMULATIVE USAGE BASED ON EFFECTIVE │ ⟶ 216
│        USAGES FOR TIME SEGMENTS               │
└──────────────────────────────────┘

         NO    ⟨ CUMULATIVE          ⟩ ⟶ 218
       ◀────── ⟨ USAGE VIOLATES UTILIZATION ⟩
               ⟨ CRITERIA?           ⟩
                        │ YES
┌──────────────────────────────────┐
│ INITIATE ACTION BASED ON CUMULATIVE USAGE │ ⟶ 220
└──────────────────────────────────┘

              ( END )
```

FIG. 2

## Description

TECHNICAL FIELD

The subject matter described herein relates generally to aircraft systems, and more particularly, embodiments of the subject matter relate to determining effective usage in fly-by-wire systems.

BACKGROUND

In some modern aircraft, traditional mechanical flight control systems have been replaced with electrically controlled actuators, often referred to as fly-by-wire. Instead of mechanical linkages between cockpit controls and flight control surfaces and motors, electrical signals are utilized to communicate movements of cockpit controls either to actuators for the flight control surfaces or to motors for flight control maneuvers. For safety purposes, fly-by-wire systems often employ redundancy to ensure they are single or dual or partial-fail operational.

Due to costs and time requirements, it is desirable to minimize and selectively perform maintenance at intervals where the likely benefits outweigh the costs. At the same time, it is desirable to minimize the risks of performing maintenance too infrequently, particularly for mission critical applications. Therefore, a preventative maintenance approach is often adopted to regularly inspect components. Condition-based maintenance (or monitoring) (CBM) is a concept developed to reduce costs associated with preventative maintenance, where maintenance is ideally performed only on an as-needed basis. However, due to real-world uncertainties and complexities, existing approaches are often too conservative, resulting in excess maintenance. Accordingly, it is desirable to provide methods and systems to improve maintenance of fly-by-wire devices and other electronic aircraft controls.

BRIEF SUMMARY

Methods and systems are provided for monitoring usage associated with a control component of a vehicle, such as an aircraft. An exemplary method involves determining, based on measurement data pertaining to an operating environment of the vehicle during the operation of the vehicle, a respective environmental state for each respective time segment of a plurality of time segments, determining, for each respective time segment of the plurality of time segments, an effective usage associated with the respective time segment based at least in part on a respective duration of the respective time segment and the respective environmental state associated with the respective time segment, calculating a cumulative usage associated with the control component based on the plurality of effective usages, and initiating an action with respect to the control component based on a relationship between the cumulative usage and a threshold.

In another embodiment, an aircraft system is provided. The aircraft system includes a data source onboard the aircraft to provide measurement data for an environmental condition, a flight control component, an actuation arrangement coupled to the flight control component, a flight control system coupled to the actuation arrangement to command the actuation arrangement for operating the flight control component, and a processing system coupled to the data source and the flight control system. The processing system determines, for each respective time segment of a plurality of time segments, a representative state for the environmental condition based on a subset of the measurement data corresponding to the respective time segment, determines, for each respective time segment, a respective usage coefficient based at least in part on the representative state for the respective time segment, calculates, for each respective time segment, a respective effective usage using the respective usage coefficient, and determines a cumulative usage based on the respective effective usages associated with the respective time segments of the plurality of time segments. The flight control system commands the actuation arrangement to operate the flight control component in a manner that is influenced by the cumulative usage.

In another embodiment, a method of monitoring a flight control surface, motor, or other component associated with an aircraft is provided. The method involves obtaining, from one or more data sources onboard the aircraft, measurement data for a plurality of environmental conditions, obtaining specification data associated with the flight control surface or motor, and determining, for each respective time segment of a plurality of time segments, a representative state for each respective environmental condition of the plurality of environmental conditions based on a respective subset of the measurement data corresponding to the respective environmental condition and the respective time segment using the specification data. The method continues by identifying, for each respective time segment of a plurality of time segments, a respective usage coefficient based on the representative state for each respective environmental condition of the plurality of environmental conditions, determining, for each respective time segment of the plurality of time segments, a respective effective usage associated with the respective time segment based at least in part on a respective duration of the respective time segment and the respective usage coefficient, and determining a cumulative usage associated with the flight control surface or motor based on the respective effective usage associated with each respective time segment of the plurality of time segments. The method initiates an action with respect to the flight control surface or motor when the cumulative usage is greater than a threshold.

Furthermore, other desirable features and characteristics of the subject matter described herein will become apparent from the subsequent detailed description and the appended claims, taken in conjunction with the accompanying drawings and the preceding background.

BRIEF DESCRIPTION OF THE DRAWINGS

Embodiments of the subject matter will hereinafter be described in conjunction with the following drawing figures, wherein like numerals denote like elements, and:

> FIG. 1 is a block diagram of an electrical system suitable for use onboard a vehicle such as an aircraft in an exemplary embodiment;

> FIG. 2 is a flow diagram of an exemplary monitoring process suitable for implementation by or in conjunction with the system of FIG. 1 in accordance with one or more exemplary embodiments; and

> FIG. 3 is a block diagram of an electrical system suitable for implementing the monitoring process of FIG. 2 onboard a vehicle such as an urban aerial mobility vehicle in an exemplary embodiment.

DETAILED DESCRIPTION

The following detailed description is merely exemplary in nature and is not intended to limit the subject matter of the application and uses thereof. Furthermore, there is no intention to be bound by any theory presented in the preceding background, brief summary, or the following detailed description.

Embodiments of the subject matter described herein relate to electrically-controlled vehicle systems. For purposes of explanation, the subject matter is described herein primarily in the context of aircraft where flight control components (e.g., flight control surfaces, motors, propellers, rotors, and/or the like) are controlled using electrical signals, however, the subject matter is not necessarily limited to use with aircraft and may be implemented in an equivalent manner for control components associated with other types vehicles (e.g., automotive vehicles, marine vessels, or the like). For purposes of explanation, but without limitation, the subject matter may be primarily described herein in the context of flight control surfaces, motors and/or actuation arrangements associated therewith; however, it should be appreciated that the subject matter is not necessarily limited to use with flight control surfaces, motors, or fly-by-wire aircraft.

In exemplary embodiments described herein, operation of a flight control surface, motor, or other component is segmented or otherwise divided into a number of different time segments. For each time segment, an integrated contextual state is determined that characterizes the operating environment during that time segment in combination with the operational state of the flight control surface or motor during that time segment. The integrated contextual state is then utilized to determine an aggregate usage coefficient that characterizes relative amount of loading, wear, stress, and/or the like that the flight control surface or motor was likely subjected to during that time segment that takes into account both the manner in which the flight control surface or motor was operated and the contemporaneous operating environment. The duration of the time segment may then be multiplied or scaled by the usage coefficient to obtain an effective usage associated with the time segment. The effective usages associated with the different time segments may then be added or combined to determine a cumulative usage of the flight control surface or motor, which, in turn may be utilized to schedule or initiate maintenance, determine the remaining useful life, and/or the like. Additionally, in some embodiments involving fly-by-wire systems with redundancy, the effective usage associated with a particular control surface or motor or actuator may be utilized to dynamically select a control surface or motor or actuator for use from among a set of redundant control surfaces or motors or actuators based on the effective usages associated therewith. In this regard, the loading, wear, stress, and/or the like may be more uniformly distributed across redundant components to reduce the likelihood of failure or downtime for any one of the components, thereby helping to preserve the fail operational benefits of redundancy during operation.

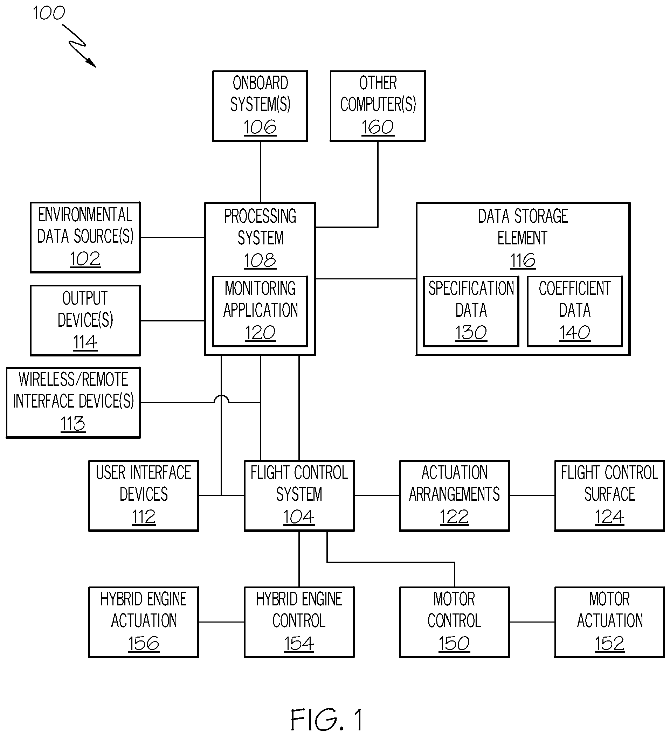

FIG. 1 depicts an exemplary embodiment of an electrical system 100 suitable for use onboard a vehicle, such as an aircraft. The illustrated system 100 includes one or more environmental data sources 102, a vehicle control system 104, and one or more additional onboard systems 106 coupled to a processing system 108 that implements, executes, or otherwise supports a monitoring application 120 capable of determining usage associated with one or more vehicle control components 124, 152, 156 in real-time and dynamically adjusting the manner in which a vehicle control component 124, 152, 156 (or an actuation controller 122, 150, 154 associated therewith) is operated or controlled based on the usage, as described in greater detail below.

It should be appreciated that FIG. 1 is a simplified representation of an electrical system 100 for purposes of explanation and not intended to limit the subject matter in any way. In this regard, it will be appreciated that in practice, an electrical system 100 onboard a vehicle such as an aircraft may include any number of different data sources and onboard systems configured to support operation of the aircraft, and the subject matter described herein is not limited to any particular types or number of onboard data sources or systems. In addition to potential redundancies, it should be noted that in various practical embodiments, features and/or functionality of processing system 108 described herein can be implemented by or otherwise integrated with the features and/or functionality provided by another onboard system 104, 106. In other words, some embodiments may integrate the processing system 108 with the flight control system 104 or another onboard system 106, while other embodiments may employ a standalone monitoring system that comprises the processing system 108. In yet other embodiments, various aspects of the subject matter described herein may be implemented by or at an electronic flight bag (EFB) or similar electronic device that is communicatively coupled to the processing system 108 and/or onboard systems 104, 106. In this regard, the subject matter described herein could be implemented in a standalone device or embedded in another device (e.g., a flight control computer, a mission computer, vehicle management computer, or the like), and could be implemented in the context of any sort of controls, actuators or moving devices for any sort of vehicle, including fixed wing aircraft, helicopters, tiltrotor aircraft, tiltwing aircraft, or other aerial vehicles (e.g., urban aerial mobility vehicles), which could be manned or unmanned.

In one or more exemplary embodiments, the electrical system 100 is a fly-by-wire system onboard an aircraft, where the vehicle control system 104 is realized as a flight control system that is communicatively coupled to one or more actuators 122, 150, 154 via one or more communications buses, with the actuator 122, 150, 154 being capable of adjusting a position, orientation, or other aspect of operation of the respective component 124, 152, 156 associated therewith. In this regard, in one or more exemplary embodiments, the flight control surfaces 124 generally represent the aileron, flaps, rudders, spoilers, slats, stabilizers, elevators, or other aerodynamic devices capable of adjusting the attitude of the aircraft. Similarly, flight control motors 150, 152 or hybrid engine actuators 154, 156 for blades, propellers or rotors can be used to generate the functions for aircraft rolling, yawing, and pitching maneuvers by adjusting or altering operation of the respective blades, propellers or rotors, such as multi-rotorcraft operation. That said, the subject matter described herein is not intended to be limited to any particular types of flight control surface, motor or component. An actuation arrangement 122 generally includes an actuator control module that is coupled to or otherwise configured to control operation of an actuator, such as a servo motor, which, in turn, adjusts a position or orientation of a first flight control surface 124. In one or more embodiments, the fly-by-wire system 100 provides redundancy by including multiple redundant instances of actuator and/or motor control modules and actuators associated with each respective flight control surface 124, and/or motor actuation system 152.

In one or more embodiments, the flight control system 104 receives signals indicative of a sensed or measured position, orientation, or adjustment to user interface devices 112 (e.g., joysticks, knobs, or another suitable device adapted to receive input from a user) in the cockpit of the aircraft. In other embodiments, the flight control system 104 receives such input signals via a wireless and/or remote interface device 113. The flight control system 104 converts the inputs or adjustments received at the respective interface device(s) 112, 113 into corresponding command signals for one or more flight control surfaces 124 and output or otherwise provide the command signals to the actuation arrangement(s) 122 associated with the flight control surface(s) 124. The flight control system 104 may be realized using any sort of processing system, processing device, hardware, circuitry, logic, software, firmware and/or other components. In practice, the fly-by-wire system 100 provides redundancy by incorporating multiple flight control computers within the flight control system 104, where each flight control computer is capable of independently supporting the functionality of the flight control system 104. In this regard, each flight control computer may also be communicatively coupled to multiple redundant actuation arrangements 122 associated with a given flight control surface 124. It should be noted that the subject matter described herein is not limited to any particular types of user interface devices 112, and in practice, one or more user interface devices 112 may be external to or independent of the vehicle and configured to communicate with the flight control system 104 wirelessly. For example, a wireless or remote interface device 113 may be utilized to communicate with the processing system 108 and/or the flight control system 104 to support unmanned or remote-controlled operation or manned/optionally manned and unmanned operation.

In exemplary embodiments, the flight control system 104 is communicatively coupled to one or more onboard avionics systems 106. Based on the data or information received from the avionics systems 106 and a sensed position of or an adjustment to a respective user interface device 112, the flight control system 104 (or the flight control computer(s) thereof) determine commands for controlling the position of or otherwise operating one or more of the flight control surfaces 124. During operation of the aircraft, the flight control system 104 continually analyzes the user interface devices 112 and the onboard avionics systems 106 to determine corresponding commands for how the respective flight control surfaces 124 should be operated in response to adjustments or changes to the user interface devices 112 substantially in real-time. For each respective flight control surface 124, the flight control system 104 generates a corresponding position command that is provided to the appropriate actuation arrangement 122, which, in turn identifies the commanded adjustment or position for its associated flight control surface 124 and generates corresponding motor commands for operating a motor to achieve the commanded adjustment to the flight control surface 124.

In the illustrated embodiment, the environmental data sources 102 generally represent the sensing elements, sensors, or other electrical components or devices that output or otherwise provide one or more electrical signals indicative of a value for a metric that is correlative to or indicative of one or more environmental conditions (or characteristics) that are sensed, measured, detected, or otherwise quantified by their respective sensing elements. In various embodiments, each of the environmental data sources 102 includes or is otherwise realized as a sensing arrangement comprising one or more sensing elements that sense, measure, detect, or otherwise quantify an environmental characteristic and output one or more electrical signals representative of the value or state of that environmental characteristic. For example, an environmental data source 102 onboard an aircraft could include, without limitation, one or more pressure sensors, temperature sensors, humidity sensors, salinity sensors, pitot tubes, barometers, and/or the like. In some embodiments, the environmental data sources 102 may include redundant sensors or systems that sense, measure, detect, or otherwise quantify the same characteristic. It should be noted that vibration measurements may be obtained from gyroscopes or other gyro sensors, inertial reference sensors, and/or the like may be utilized to verify or adjust the measurements from one or more of the environmental data sources 102, as will be appreciated in the art.

In the embodiment of FIG. 1, the onboard system(s) 106 generally represent any sort of electrical, mechanical, hydraulic, pneumatic, environmental, or propulsion systems configured to provide information or data that characterizes or is otherwise indicative of a current operational status of the vehicle. For example, in the case of an aircraft, the onboard vehicle systems 106 could include or otherwise be realized as any one or more of the following: a flight management system (FMS), a communications system, a navigational system, a weather system, a radar system, an autopilot system, an autothrust system, a landing gear system, hydraulics systems, pneumatics systems, environmental systems, electrical systems, engine systems, trim systems and/or another avionics system. As described in greater detail below, the processing system 108 is coupled to the onboard system(s) 106 to obtain information indicative of the current operational status of the aircraft, such as, for example, the current flight phase, the current altitude, the current aircraft configuration, the current meteorological conditions, and/or other operating conditions. For example, the loading, stress, and/or wear on a flight control surface 124 (or an actuation arrangement 122 associated therewith) may vary during flight depending on the current phase of flight, the current physical configuration of the aircraft, the current meteorological conditions (e.g., temperature, winds, precipitation, and/or the like). Accordingly, the current status information provided by the onboard system(s) 106 may be utilized by the monitoring application 120 to account for the current real-time operating conditions when determining the effective usage associated with a flight control surface 124 and/or an actuation arrangement 122.

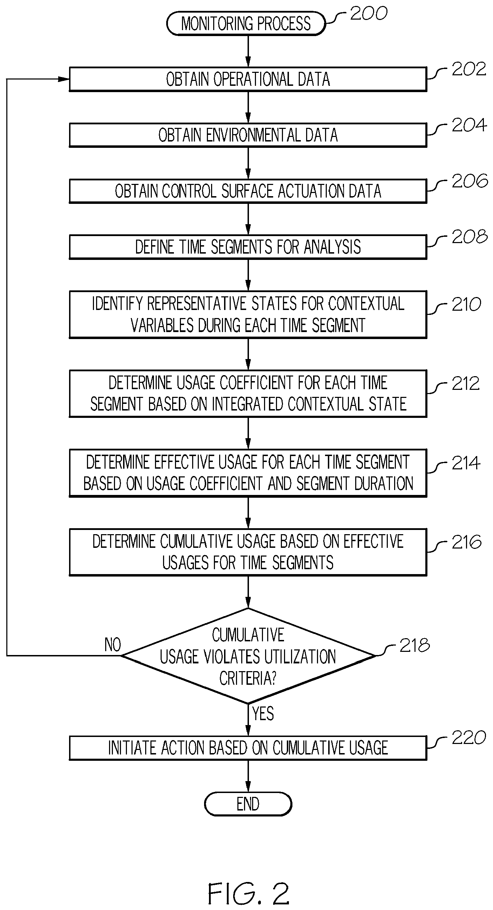

The processing system 108 generally represents the hardware, software, and/or firmware components (or a combination thereof), which is communicatively coupled to the various elements of the system 100 and configured to support the monitoring process 200 of FIG. 2 and perform additional tasks and/or functions described herein. Depending on the embodiment, the processing system 108 may be implemented or realized with a general-purpose processor, a content addressable memory, a digital signal processor, an application specific integrated circuit, a field programmable gate array, any suitable programmable logic device, discrete gate or transistor logic, processing core, discrete hardware components, or any combination thereof, designed to perform the functions described herein. The processing system 108 may also be implemented as a combination of computing devices, e.g., a plurality of processing cores, a combination of a digital signal processor and a microprocessor, a plurality of microprocessors, one or more microprocessors in conjunction with a digital signal processor core, or any other such configuration. In practice, the processing system 108 may include processing logic that may be configured to carry out the functions, techniques, and processing tasks associated with the operation of the system 100, as described in greater detail below. Furthermore, the steps of a method or algorithm described in connection with the embodiments disclosed herein may be embodied directly in hardware, in firmware, in a software module executed by the processing system 108, or in any practical combination thereof. In this regard, the processing system 108 accesses a data storage element (or memory) capable of storing code or other computer-executable programming instructions that, when read and executed by the processing system 108, cause the processing system 108 to generate, implement, or otherwise execute the monitoring application 120 that supports or otherwise performs certain tasks, operations, functions, and/or processes described herein.

In exemplary embodiments, the processing system 108 is coupled to a data storage element 116 (or memory), which may include or otherwise be realized using any sort of non-transitory short- or long-term storage media capable of storing code, computer-executable programming instructions, and/or other data. Depending on the embodiment, the data storage element 116 may include or otherwise be physically realized using random access memory (RAM), read only memory (ROM), flash memory, registers, a hard disk, or another suitable data storage medium known in the art or any suitable combination thereof. Moreover, in some embodiments, the data storage element 116 may be realized as a database or some other remote data storage or device that is communicatively coupled to the processing system 108 via a communications network. In such embodiments, data maintained at the data storage element 116 may be downloaded or otherwise retrieved by the processing system 108 and stored locally at the processing system 108 or an onboard data storage element.

In exemplary embodiments, the data storage element 116 stores or otherwise maintains specification data 130 that indicates the technical, environmental, or other operational specifications for the flight control surfaces 124 and/or actuation arrangements 122 onboard a given aircraft. In this regard, the specification data 130 may provide operating ranges, requirements, thresholds, and/or other information that may be utilized to qualitatively characterize the state or operating environment of a respective flight control surface 124 and/or actuation arrangement 122. In exemplary embodiments, the data storage element 116 stores or otherwise maintains coefficient data 140 that quantifies or otherwise characterizes the relative usage on a flight control surface 124 and/or actuation arrangement 122 with respect to operating conditions or operational states, as described in greater detail below. In this regard, the coefficient data 140 may be derived from or otherwise determined based on relationships between historical environmental and operational data associated with prior instances of the flight control surfaces 124 and/or actuation arrangements 122 and the resulting useful life or lifetime. For example, the relationships between sets of historical data and the resulting component lives may be analyzed or otherwise compared to one another to quantify or otherwise characterize the relationship between parameters or variables characterizing the operation or operating environment of a respective flight control surface 124 and/or actuation arrangement 122 and the resulting lifetime of the respective flight control surface 124 and/or actuation arrangement 122. Machine learning or other artificial intelligence or big data techniques may be utilized to identify statistical or probabilistic relationships between the state of operational variables and component lifetime to derive coefficients that characterize the relative impact or effect the operational variable state has on the resulting useful life of a component. That said, in other embodiments, the coefficient data 140 may be determined during development, for example, by subjecting a particular component to aerodynamics forces and/or moments in different directions and differing amounts of loading under different environmental conditions and measuring the resultant impact on the component. In such embodiments, knowledge-based calculations or other estimations of the probable effects of different environmental conditions or variables may be utilized to derive the coefficient data rather than relying on machine learning, artificial intelligence, or big data techniques.

As described in greater detail below in the context of FIG. 2, the monitoring application 120 may utilize the specification data 130 to classify the current environmental or operational conditions provided by onboard sources 102, 104, 106 into corresponding discrete qualitative states. The monitoring application 120 then utilizes the coefficient data 140 to identify or otherwise determine the appropriate usage life coefficient value for an integrated contextual state and utilizes the usage life coefficient value to scale the duration of the integrated contextual state into a corresponding effective usage of a particular flight control surface 124 and/or actuation arrangement 122. The effective usage of individual time segments may be added or otherwise summed to arrive at a cumulative usage for that particular flight control surface 124 and/or actuation arrangement 122.

Based on the cumulative usage, the monitoring application 120 may calculate or otherwise determine a remaining useful life of a particular flight control surface 124 and/or actuation arrangement 122. Additionally, the cumulative usage may be utilized to schedule or initiate maintenance or replacement of a particular flight control surface 124 and/or actuation arrangement 122. In this regard, exemplary embodiments described herein include one or more output devices 114 coupled to the processing system 114 that may be utilized to provide notifications or recommendations pertaining to the condition or maintenance of the flight control surfaces 124 and/or actuation arrangements 122. In exemplary embodiments, the output device 114 includes one or more electronic display devices coupled to the processing system 108, with the processing system 108 and/or monitoring application 120 providing graphical indicia of component usage or other maintenance information a pilot or other user on the display device. Furthermore, in one or more exemplary embodiments described herein, when redundant actuation arrangements 122 are available for a given flight control surface 124, the cumulative usages associated with the redundant actuation arrangements 122 may be utilized by the monitoring application 120 and/or the flight control system 104 to dynamically adjust or otherwise alter which actuation arrangement 122 is being utilized in real-time to help preserve redundancy, for example, by maintaining a cumulative usage of each actuation arrangement 122 below a threshold value, equalizing or balancing the cumulative usage across actuation arrangements 122, and/or the like.

While subject matter may be described herein in the context of determining usage with respect to a flight control surface 124 or an actuation arrangement 122 associated therewith for purposes of explanation, the subject matter is not limited to flight control surface or flight control surface actuators and may be implemented in an equivalent manner for any other control component onboard a vehicle, such as, for example, a motor control system 150 and/or a motor actuation system 152 (e.g., for blades, propellers, rotors, or the like), a hybrid engine control system 154 and/or a hybrid engine actuation system 156 (e.g., for urban aerial mobility (UAM) or autonomous aerial vehicle (AAV) vehicles), and/or the like. Additionally, the monitoring application 120 utilize data or information obtained from any number of different computers 160, such as a vehicle management computer, a mission computer, or the like, and moreover, the features and/or functionality of the monitoring application 120 may be implemented at or by another computer 160 within the system 100.

FIG. 2 depicts an exemplary embodiment of a monitoring process 200 suitable for use in monitoring usage of a component in an electrical system, such as the fly-by-wire aircraft system 100 of FIG. 1. The various tasks performed in connection with the illustrated process 200 may be implemented using hardware, firmware, software executed by processing circuitry, or any combination thereof. For illustrative purposes, the following description may refer to elements mentioned above in connection with FIG. 1. In practice, portions of the monitoring process 200 may be performed by different elements of the system 100; that said, for purposes of explanation, the monitoring process 200 may be described herein in context of being performed primarily by the processing system 108 and/or the monitoring application 120. It should be appreciated that the monitoring process 200 may include any number of additional or alternative tasks, the tasks need not be performed in the illustrated order and/or the tasks may be performed concurrently, and/or the monitoring process 200 may be incorporated into a more comprehensive procedure or process having additional functionality not described in detail herein. Moreover, one or more of the tasks shown and described in the context of FIG. 2 could be omitted from a practical embodiment of the monitoring process 200 as long as the intended overall functionality remains intact. Additionally, for purposes of explanation, the monitoring process 200 is primarily described herein in the context of an aircraft or aviation-related application; however, it should be appreciated that the monitoring process 200 is not necessarily limited to aircraft systems, and could be implemented in an equivalent manner for other vehicle systems and vehicle control surfaces.

Depending on the embodiment, the monitoring process 200 may be performed in real-time during vehicle operation to dynamically determine and proactively respond to changes in component usage, or retrospectively when the vehicle is not in operation (e.g., during maintenance). Additionally, it should be noted that the monitoring process 200 may be performed in the context of monitoring usage with respect to an individual control surface 124, an individual actuation arrangement 122, or any combination of control surface 124 and actuation arrangement 122.

Referring to FIG. 2 with continued reference to FIG. 1, the monitoring process 200 receives or otherwise obtains information pertaining to the operating state of the vehicle (task 202). In this regard, the monitoring application 120 obtains data or information provided by the onboard systems 106 indicative of the current operational status of the aircraft, such as, for example, the current flight phase, the current altitude, the current aircraft configuration, the current meteorological conditions, and/or other operating conditions that are likely to impact the loading, wear, stress or other aging of a flight control surface 124 and/or actuation arrangement 122. Additionally, the monitoring application 120 may obtain historical data or information previously provided by the onboard systems 106 indicative of the prior operational status of the aircraft that may be stored or otherwise maintained in a data storage element, such as data storage element 116 or another data storage element, which may be located onboard or remote. In this regard, the operational data may be stored or otherwise maintained in association with a timestamp or other temporal information to enable classifying or categorizing the operational data into different time segments, as described in greater detail below.

The monitoring process 200 also receives or otherwise obtains data or information pertaining to the environmental conditions in which the vehicle is being operated (task 204). In this regard, the monitoring application 120 obtains measurement data or information provided by the environmental data sources 102 indicative of the current environment about the aircraft, such as, for example, the current temperature, the current humidity, the current pressure, the current wind speed, the current salinity, and the like. Again, the monitoring application 120 may also obtain historical environmental measurement data or information previously provided by the environmental data sources 102 that may be stored or otherwise maintained in a data storage element. Similar to the operational data, the environmental measurement data may be stored or otherwise maintained in association with a timestamp or other temporal information to enable classification or categorization into different time segments, as described in greater detail below.

In exemplary embodiments, the monitoring process 200 also receives or otherwise obtains data or information characterizing the physical operation or actuation state of the control surface (task 206). In this regard, the monitoring application 120 may obtain feedback information from the flight control system 104 and/or the actuation arrangement(s) 122 that indicates the current position, orientation, or other state of actuation of a respective flight control surface 124 and/or actuation arrangement 122. Again, the monitoring application 120 may also obtain historical control surface actuation data that may be stored or otherwise maintained in a data storage element, and the control surface actuation data may be stored or otherwise maintained in association with a timestamp or other temporal information to enable classification or categorization into different time segments.

The monitoring process 200 continues by identifying or otherwise defining time segments for subdividing the obtained data for usage analysis (task 208). In some embodiments, the time segments may be defined by fixed time increments (e.g., every minute, every ten minutes, every hour, etc.). In other embodiments, the time segments may be contextually defined (e.g., based on flight phase, altitude, or the like). The length or duration of the time segments may vary depending on the size or amount of available data storage, the frequency or duration for which a particular component is operated (e.g., some control surfaces such as flaps or slats are normally only operated a few times for relative short durations during specific flight phases), and/or the desired accuracy or reliability for the resultant calculations.

For each time segment to be analyzed, the monitoring process 200 creates or otherwise generates an integrated contextual state that characterizes or otherwise describes the context in which the flight control surface and/or actuation arrangement of interest was operated during that time segment across a plurality of different variables that are correlative to or otherwise influence the useful life of the respective flight control surface and/or actuation arrangement. For each contextual variable, the monitoring process 200 identifies or otherwise determines a representative state for the respective variable based on its associated data contemporaneously obtained during the time segment (task 210). In this regard, the representative state may summarize or characterize the average or nominal state for that variable across the duration of the time segment. For example, measurement data samples for an environmental condition obtained during an analysis time segment may be averaged or otherwise analyzed to determine a representative measurement for the environmental condition associated with that analysis time segment (e.g., the mean or median measurement value). Similarly, the flight control surface actuation data obtained during an analysis time segment may be analyzed to determine a representative actuation state for the flight control surface 124 and/or actuation arrangement 122 (e.g., the average position or orientation of the flight control surface 124).

In exemplary embodiments, the monitoring application 120 identifies or otherwise determines a qualitative representative state for one or more of the contextual variables using the technical specification data 130 for the respective component. For example, the monitoring application 120 may obtain, from the specification data 130 in the data storage element 116, a recommended operating temperature range for the flight control surface 124, and then characterize or classify the temperature variable associated with the flight control surface 124 for a given time segment as being above the recommended operating temperature range, within the recommended operating temperature range, or below the recommended temperature range based on a relationship between the representative temperature for the time segment and the specified operating range. In this regard, if the recommended operating temperature range for a flight control surface 124 is between -5° Celsius and 30° Celsius and the average temperature measurement for a time segment is greater than 30° C, the monitoring application 120 may assign a value or state to the temperature variable for the integrated contextual state of the time segment that indicates the temperature during the time segment was above the recommended range. Similarly, other environmental variables of the integrated contextual state for a given time segment may be assigned a qualitative state or value based on the relationship between the average or representative measurement for a respective environmental condition and the specified ranges or thresholds for that environmental condition set forth in the specification data 130 for a particular flight control surface 124 and/or actuation arrangement 122. In some embodiments, the actuation state variable(s) or other operational variable(s) may similarly be assigned qualitative states based on the specification data 130 for a particular flight control surface 124 and/or actuation arrangement 122.

Still referring to FIG. 2, in exemplary embodiments, the monitoring process 200 identifies, calculates, or otherwise determines a usage coefficient for each analysis time segment based on the integrated contextual state for the time segment (task 212). In this regard, the usage coefficient reflects the relative amount of loading, stress, wear or other aging that a particular flight control surface 124 and/or actuation arrangement 122 as subjected to during the time segment based on the overall operating context defined by the integrated contextual variables. In one embodiment, the data storage element 116 maintains the usage coefficient data 140 in a lookup table that may be queried to identify the usage coefficient value that corresponds to the relevant combination of contextual variables. For example, the monitoring application 120 may query the coefficient data 140 for a coefficient value associated with the current combination of the various qualitative environmental variable states and the qualitative actuation state. In various embodiments, other operational states or variables may also be utilized to further refine the usage coefficient, for example, different coefficient lookup tables may be created for different flight phases.

In other embodiments, the monitoring application 120 may obtain coefficient values on a per-variable basis, and then calculate or otherwise determine a representative usage coefficient for the analysis time segment as a function of the coefficient values associated with each individual context variable. For example, the monitoring application 120 may query the coefficient data 140 for a first coefficient value corresponding to the qualitative temperature state, a second coefficient value corresponding to the qualitative humidity state, a third coefficient value corresponding to the qualitative pressure state, and then calculate a representative usage coefficient value for the analysis time segment based on those constituent coefficient values (e.g., by averaging the first, second and third coefficient values). In various embodiments, the representative usage coefficient for the analysis time segment may be determined as a weighted sum of individual coefficient values, or using some other function derived from machine learning or artificial intelligence based on the correlation or relationship between historical states or values for the individual context variables and the resulting amount of aging or degradation to a given component. In this regard, in yet other embodiments, the coefficient data 140 may define one or more functions, formulas, equations or other manners for calculating a usage coefficient value based on the integrated contextual variable states, with a respective function, formula, or equation being derived by machine learning or artificial intelligence based on the correlation or relationship between historical states or values for the individual context variables and the resulting amount of aging or degradation to a given component.

By way of example, the integrated contextual state for a segment may be defined as the combination of very high temperature (e.g., a measured temperature above an upper temperature threshold), high humidity (e.g., a measured humidity above the desired operating range), a medium pressure (e.g., a measured pressure within the desired operating range) and high salinity (e.g., a measured salinity above a desired operating range). In one embodiment, where data storage element 116 maintains usage coefficient data 140 on a per-integrated contextual state basis, the monitoring application 120 may query the coefficient data 140 for a coefficient value associated with the combined very high temperature, high humidity, medium pressure, high salinity state for the corresponding flight phase. In other embodiments, where data storage element 116 maintains usage coefficient data 140 on a per-variable basis, the monitoring application 120 may query the coefficient data 140 for individual coefficient values associated with the different variable states and calculate the representative usage coefficient value as a weighted sum of the very high temperature coefficient value, the high humidity coefficient value, the medium pressure coefficient value, and the high salinity coefficient value.

Referring again to FIG. 2, after determining usage coefficients for each analysis time segment, the monitoring process 200 continues by calculating or otherwise determining an effective usage associated with each analysis time segment based on the segment's duration and the segment's associated usage coefficient, and then calculating or otherwise determining a cumulative usage for the particular component based on the effective usages associated with the different analysis time segments (tasks 214, 216). For example, the cumulative usage may be governed by the equation $\sum_{i=1}^{n} t_i c_i$, where $t_i$ represents the duration of a respective analysis time segment, $c_i$ represents the usage coefficient associated with a respective analysis time segment, and the product $t_i c_i$ represents the effective usage for a respective analysis time segment. In this regard, the usage coefficient is operative to scale the duration of a respective time segment up or down in a manner commensurate with the relative amount of loading, stress, wear, or other aging that the component was subjected to during the respective time segment. Thus, for time segments where the qualitative environmental variable states indicate that the operation occurred within normal or desirable environmental conditions (e.g., environmental measurement data for various environmental conditions within their optimal operating ranges prescribed by the technical specification data 130 for a flight control surface 124 and/or actuation arrangement 122) and the actuation state or other operational variables are indicative of relatively less loading or stress on the flight control surface 124 and/or actuation arrangement 122, the usage coefficient associated with those time segments may be less than or equal to one to reflect a below average amount of degradation of the flight control surface 124 and/or actuation arrangement 122 during those time segments. Conversely, for time segments where the qualitative environmental variable states indicate that the operation occurred during relatively extreme environmental conditions (e.g., environmental measurement data one or more environmental conditions above or below thresholds prescribed by the technical specification data 130) and/or the actuation state or other operational variables are indicative of relatively higher loading or stress on the flight control surface 124 and/or actuation arrangement 122, the usage coefficient associated with those time segments may be greater than one to reflect a greater amount of degradation of the flight control surface 124 and/or actuation arrangement 122 during those time segments.

In the illustrated embodiment, the monitoring process 200 analyzes or otherwise compares the cumulative usage to one or more utilization criteria to identify when the cumulative usage has exceeded or otherwise violated a utilization threshold (task 218). In this regard, various thresholds may be utilized to define different maintenance operations, inspections, or other actions to be performed with respect to a particular flight control surface 124 and/or actuation arrangement 122 based on the estimated usage of that flight control surface 124 and/or actuation arrangement 122. For example, various different inspection thresholds may be defined at different points within the useful life of a flight control surface 124 and/or actuation arrangement 122 to ensure the flight control surface 124 and/or actuation arrangement 122 is periodically inspected at desired intervals. Similarly, replacement thresholds or thresholds for other maintenance actions may be defined to ensure maintenance of a flight control surface 124 and/or actuation arrangement 122 is performed before the cumulative usage of the flight control surface 124 and/or actuation arrangement 122 reaches its useful lifetime limit.

When the cumulative usage violates a utilization threshold, the monitoring process 200 initiates or otherwise performs one or more actions based on the cumulative usage (task 220). For example, the monitoring application 120 may generate or otherwise provide one or more user notifications via an output device 114 that identifies or otherwise indicates the particular flight control surface(s) 124 and/or actuation arrangement(s) 122 that should be inspected, replaced, or otherwise assessed based on their usage. The monitoring application 120 may also display or otherwise provide the cumulative usage determined for the respective flight control surface(s) 124 and/or actuation arrangement(s) 122. In yet other embodiments, the monitoring application 120 may transmit or otherwise provide the cumulative usage for various flight control surface(s) 124 and/or actuation arrangement(s) 122 to another monitoring system, such as a condition-based maintenance (CBM) system, a prognostics and health management (PHM) system, health and usage monitoring system (HUMS), or other similar system, which, in turn performs one or more algorithms using the cumulative usage(s) provided by the monitoring application 120 to automatically schedule, trigger, or otherwise perform various maintenance-related actions with respect to the flight control surface(s) 124 and/or actuation arrangement(s) 122. It should be noted that the monitoring process 200 may be continually repeated throughout operation of a vehicle or throughout the lifetime of a component thereof to continually update the cumulative usage estimated for that component (or a combination of components).

In one or more embodiments, the utilization criteria may include thresholds or other criteria that define the relative usage between redundant components. In this regard, for a set of redundant actuation arrangements 122, one or more utilization balancing criteria may be defined for managing the relative usage of the different actuation arrangements 122 to prevent an imbalanced or disproportionate usage of the redundant actuation arrangements 122. For example, a maximum utilization difference threshold of 25% may be defined for a given set of actuation arrangements 122 such that when the cumulative usage of one of the actuation arrangements 122 is greater than or equal to 25% more than the cumulative usage of one of the other actuation arrangements 122, the monitoring application 120 commands or otherwise instructs the flight control system 104 to temporarily forego utilization of the actuation arrangement 122 having the higher cumulative usage until the cumulative usages of all of the actuation arrangements 122 are within a desired range of one another. It should be noted that any number of different utilization criteria and corresponding logical schemes may be employed to achieve a desired amount of balance in the usage across redundant components.

In one or more embodiments, the cumulative usages associated with different redundant components are utilized to dynamically control or otherwise adjust which component is being utilized in real-time based on the respective cumulative usages. For example, in one or more embodiments, for a set of redundant actuation arrangements 122, at the end of each analysis time segment, the monitoring application 120 dynamically determines updated cumulative usages for each of the redundant actuation arrangements 122 and then commands, signals, or otherwise instructs the flight control system 104 to utilize the actuation arrangement 122 having the lowest cumulative usage during the upcoming time segment. In this regard, the flight control system 104 and monitoring application 120 may be cooperatively configured to dynamically adjust which actuation arrangement 122 is utilized to control a flight control surface 124 in real-time to maintain a relatively balanced usage across the redundant actuation arrangements 122 and reduce the likelihood of premature degradation or failure of any one of the actuation arrangements 122, thereby maintaining the likelihood of prolonged redundancy.

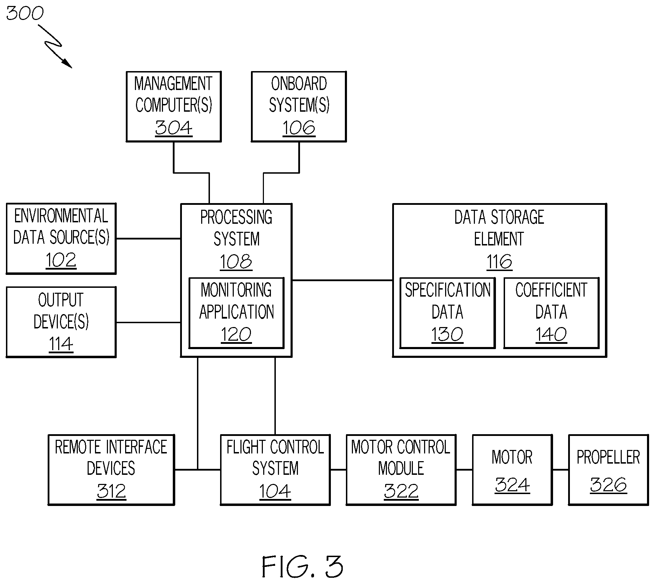

FIG. 3 depicts another embodiment of an electrical system 300 suitable for implementing the monitoring process 200 onboard a vehicle, such as an urban aerial mobility (UAM) vehicle. The illustrated system 300 includes one or more remote interface devices 312 that wirelessly communicate with one or more of the flight control system 104, the processing system 108, and/or other management computers 304 onboard the vehicle, such as, for example, a vehicle management computer, a mission computer, or the like. It should be appreciated that FIG. 3 is a simplified representation of the system 300 for purposes of explanation and not intended to limit the subject matter in any way. In this regard, features and/or functionality of processing system 108 could be implemented by or otherwise integrated with the features and/or functionality provided by one of the management computer 304 or the flight control system 104. In other words, some embodiments may integrate the processing system 108 with the flight control system 104 or a management computer 304.

In the embodiment of FIG. 3, the flight control system 104 that is communicatively coupled to an actuation system including one or more motor control modules 322 which are coupled to one or more motors 324 capable of adjusting an orientation or position of one or more flight control components 326, such as, propellers, rotors, or the like, in order to produce a corresponding change in the position or attitude of the vehicle. Although not illustrated in FIG. 3, in other embodiments, the flight control system 104 that is communicatively coupled to an actuation system including one or more control modules coupled to one or more engines or engine-generators configured to provide electrical power to other components of the system 300.

In a similar manner as described above, the monitoring application 120 may utilize the specification data 130 to classify the current environmental or operational conditions provided by onboard sources 102, 104, 106 into corresponding discrete qualitative states. The monitoring application 120 then utilizes the coefficient data 140 to convert integrated contextual state into a corresponding effective usage of a motor control module 322, motor 324 and/or flight control component 326. The effective usage of individual time segments may be added or otherwise summed to arrive at a cumulative usage for that particular motor control module 322, motor 324 and/or flight control component 326. Based on the cumulative usage, the monitoring application 120 may calculate or otherwise determine a remaining useful life of a particular motor control module 322, motor 324 and/or flight control component 326. Additionally, the cumulative usage may be utilized to schedule or initiate maintenance or replacement of a particular motor control module 322, motor 324 and/or flight control component 326. When redundant motor control modules 322 or motors 324 are available for a given flight control component 326, the cumulative usages associated with the redundant actuation arrangements 122 may be utilized by the monitoring application 120 and/or the flight control system 104 to dynamically adjust or otherwise alter which motor control module 322, motor 324 and/or flight control component 326 is being utilized in real-time to help preserve redundancy, for example, by maintaining a cumulative usage of each motor control module 322, motor 324 and/or flight control component 326 below a threshold value, equalizing or balancing the cumulative usage across motor control modules 322, motors 324 and/or flight control components 326, and/or the like.

To briefly summarize, the subject matter described herein allows for usage of flight control surfaces and actuators to be estimated in real-time in a manner that accounts for the impact of contemporaneous environmental conditions and other contextual information. Real-time usage determinations allow for dynamic adjustments to the manner in which flight control surfaces and/or actuators are controlled or utilized to manage usage thereof. In this regard, balancing the usage across components may reduce the number of maintenance checks to be performed and allow similar maintenance activities to be consolidated and performed with respect all of the redundant components at the same time, rather than performing maintenance with respect to each of the redundant components at a different time on a piecemeal basis, thereby reducing downtime. Additionally, accurate estimation of actual usage may eliminate the need to perform inspections to estimate the usage. Rather than performing inspections, replacements, or other maintenance based on time or other factors independent of actual usage, maintenance-related actions or activities with respect to fly-by-wire components may be triggered or otherwise performed based on the actual usage in a manner that emulates condition-based maintenance. In this regard, inspections, replacements, or other maintenance may be performed earlier than previously or originally scheduled (e.g., the recommended maintenance schedule) when the environmentally-compensated actual usage estimate corresponds to the scheduled usage for maintenance. The usage estimates may also be utilized for planning purposes (e.g., tailoring flight plans to avoid excessive usage of a component, ordering parts or other advance preparations for maintenance, etc.) to further improve operations and/or reduce downtime.

For the sake of brevity, conventional techniques related to sensors, statistics, data analysis, avionics systems, redundancy, machine learning, artificial intelligence, big data, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The subject matter may be described herein in terms of functional and/or logical block components, and with reference to symbolic representations of operations, processing tasks, and functions that may be performed by various computing components or devices. It should be appreciated that the various block components shown in the figures may be realized by any number of hardware components configured to perform the specified functions. For example, an embodiment of a system or a component may employ various integrated circuit components, e.g., memory elements, digital signal processing elements, logic elements, lookup tables, or the like, which may carry out a variety of functions under the control of one or more microprocessors or other control devices. Furthermore, embodiments of the subject matter described herein can be stored on, encoded on, or otherwise embodied by any suitable non-transitory computer-readable medium as computer-executable instructions or data stored thereon that, when executed (e.g., by a processing system), facilitate the processes described above.

The foregoing description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements directly connected to one another, additional intervening elements, devices, features, or components may be present in an embodiment of the depicted subject matter. In addition, certain terminology may also be used herein for the purpose of reference only, and thus are not intended to be limiting.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It should be understood that various changes may be made in the function and arrangement of elements described in an exemplary embodiment without departing from the scope of the subject matter as set forth in the appended claims. Accordingly, details of the exemplary embodiments or other limitations described above should not be read into the claims absent a clear intention to the contrary.

## Claims

1. A method of monitoring a control component during operation of a vehicle, the method comprising:

   determining, based on measurement data pertaining to an operating environment of the vehicle during the operation of the vehicle, a respective environmental state for each respective time segment of a plurality of time segments; determining, for each respective time segment of the plurality of time segments, an effective usage associated with the respective time segment based at least in part on a respective duration of the respective time segment and the respective environmental state associated with the respective time segment, resulting in a plurality of effective usages associated with the plurality of time segments; calculating a cumulative usage associated with the control component based on the plurality of effective usages; and initiating an action with respect to the control component based on a relationship between the cumulative usage and a threshold.

2. The method of claim 1, wherein determining the effective usage comprises:

   determining, for each respective time segment of the plurality of time segments, a usage coefficient based at least in part on the respective environmental state associated with the respective time segment; and calculating the effective usage associated with the respective time segment as a product of the usage coefficient and the respective duration of the respective time segment.

3. The method of claim 1, wherein determining the respective environmental state comprises determining a qualitative environmental state based on a subset of the measurement data during the respective time segment.

4. The method of claim 3, further comprising obtaining specification data associated with the control component, wherein determining the qualitative environmental state comprises classifying the subset of the measurement data into the qualitative environmental state from among a plurality of qualitative environmental states based at least in part on a relationship between the subset of the measurement data and the specification data.

5. The method of claim 3, wherein determining the effective usage comprises:

   determining, for each respective time segment of the plurality of time segments, a usage coefficient based at least in part on the qualitative environmental state associated with the respective time segment; and calculating the effective usage associated with the respective time segment as a product of the usage coefficient and the respective duration of the respective time segment.

6. The method of claim 1, wherein determining the respective environmental state comprises determining, for each of a plurality of environmental conditions, a qualitative environmental state associated with the respective environmental condition during the respective time segment based on a respective subset of the measurement data during the respective time segment corresponding to the respective environmental condition.

7. The method of claim 6, further comprising obtaining specification data associated with the control component, wherein determining the qualitative environmental state comprises for each respective environmental condition, classifying the respective subset of the measurement data into the qualitative environmental state based at least in part on a relationship between the respective subset of the measurement data and a respective threshold of the specification data corresponding to the respective environmental condition.

8. The method of claim 7, wherein determining the effective usage comprises:

   determining, for each respective time segment of the plurality of time segments, a usage coefficient based at least in part on respective qualitative environmental states associated with the plurality of environmental conditions for the respective time segment; and calculating the effective usage associated with the respective time segment as a product of the usage coefficient and the respective duration of the respective time segment.

9. The method of claim 1, wherein initiating the action comprises dynamically operating the control component in a manner that is influenced by the cumulative usage, the cumulative usage being associated with a first actuation arrangement of a plurality of actuation arrangements associated with the control component, wherein dynamically operating the control component comprises selecting another actuation arrangement of the plurality of actuation arrangements different from the first actuation arrangement for operating the control component when the cumulative usage is greater than the threshold in order to balance the cumulative usage across a plurality of actuation arrangements associated with the control component.

10. An aircraft system comprising:

a data source onboard the aircraft to provide measurement data for an environmental condition;
a flight control component;
an actuation arrangement coupled to the flight control component;
a flight control system coupled to the actuation arrangement to command the actuation arrangement for operating the flight control component; and
a processing system coupled to the data source and the flight control system to

determine, for each respective time segment of a plurality of time segments, a representative state for the environmental condition based on a subset of the measurement data corresponding to the respective time segment;
determine, for each respective time segment, a respective usage coefficient based at least in part on the representative state for the respective time segment;
calculate, for each respective time segment, a respective effective usage using the respective usage coefficient; and
determine a cumulative usage based on the respective effective usages associated with the respective time segments of the plurality of time segments, wherein the flight control system commands the actuation arrangement to operate the flight control component in a manner that is influenced by the cumulative usage.

**100**

ONBOARD SYSTEM(S) 106

OTHER COMPUTER(S) 160

ENVIRONMENTAL DATA SOURCE(S) 102

PROCESSING SYSTEM 108

MONITORING APPLICATION 120

DATA STORAGE ELEMENT 116

SPECIFICATION DATA 130

COEFFICIENT DATA 140

OUTPUT DEVICE(S) 114

WIRELESS/REMOTE INTERFACE DEVICE(S) 113

USER INTERFACE DEVICES 112

FLIGHT CONTROL SYSTEM 104

ACTUATION ARRANGEMENTS 122

FLIGHT CONTROL SURFACE 124

HYBRID ENGINE ACTUATION 156

HYBRID ENGINE CONTROL 154

MOTOR CONTROL 150

MOTOR ACTUATION 152

FIG. 1

14

FIG. 2

*300*

| | |
|---|---|
| MANAGEMENT COMPUTER(S) 304 | ONBOARD SYSTEM(S) 106 |

ENVIRONMENTAL DATA SOURCE(S) 102

OUTPUT DEVICE(S) 114

PROCESSING SYSTEM 108

MONITORING APPLICATION 120

DATA STORAGE ELEMENT 116

SPECIFICATION DATA 130

COEFFICIENT DATA 140

REMOTE INTERFACE DEVICES 312

FLIGHT CONTROL SYSTEM 104

MOTOR CONTROL MODULE 322

MOTOR 324

PROPELLER 326

FIG. 3

Europäisches
Patentamt

European
Patent Office

Office européen
des brevets

# EUROPEAN SEARCH REPORT

**Application Number**

EP 20 15 1320

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 821 873 A2 (BELL HELICOPTER TEXTRON INC [US]) 7 January 2015 (2015-01-07)<br>* paragraph [0025] *<br>* paragraph [0001] *<br>* paragraph [0009] - paragraph [0012] *<br>* paragraph [0020] - paragraph [0022] *<br>* paragraph [0026] *<br>* paragraph [0027] - paragraph [0028] *<br>* paragraph [0025] - paragraph [0026] *<br>----- | 1,3,6,7,9,10 | INV.<br>G05B23/02 |
| A | US 2005/096873 A1 (KLEIN RENATA [IL]) 5 May 2005 (2005-05-05)<br>* paragraph [0001] *<br>* paragraph [0030] *<br>* paragraph [0037] - paragraph [0040] *<br>* paragraph [0043] - paragraph [0044] *<br>* paragraph [0093] - paragraph [0095] *<br>----- | 1-10 | |

**TECHNICAL FIELDS SEARCHED (IPC)**

G05B

The present search report has been drawn up for all claims

| Place of search | Date of completion of the search | Examiner |
|---|---|---|
| Munich | 28 May 2020 | Fulcheri, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 15 1320

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2020

| Patent document cited in search report | | Publication date | Patent family member(s) | | Publication date |
|---|---|---|---|---|---|
| EP 2821873 | A2 | 07-01-2015 | EP | 2821873 A2 | 07-01-2015 |
| | | | US | 2015007666 A1 | 08-01-2015 |
| US 2005096873 | A1 | 05-05-2005 | AU | 2003288519 A1 | 22-07-2004 |
| | | | CA | 2512383 A1 | 15-07-2004 |
| | | | EP | 1581839 A2 | 05-10-2005 |
| | | | US | 2005096873 A1 | 05-05-2005 |
| | | | WO | 2004059399 A2 | 15-07-2004 |

EPO FORM P0459

For more details about this annex : see Official Journal of the European Patent Office, No. 12/82